# EUROPÄISCHE PATENTSCHRIFT

(11) **EP 2 207 985 B1**
(45) Veröffentlichungstag und Bekanntmachung des Hinweises auf die Patenterteilung: **16.11.2011**
(21) Anmeldenummer: 08803049.9
(22) Anmeldetag: 15.08.2008
(51) Int. Cl.: F16H 37/08, F16H 47/04

(54) **GETRIEBEVORRICHTUNG MIT EINEM VARIATOR**
TRANSMISSION DEVICE HAVING A VARIATOR
DISPOSITIF DE TRANSMISSION AVEC UN VARIATEUR

(30) Priorität: 02.10.2007 DE 102007047194; 16.07.2008 DE 102008040441
(43) Veröffentlichungstag der Anmeldung: 21.07.2010
(73) Patentinhaber: ZF Friedrichshafen AG, 88038 Friedrichshafen (DE)
(72) Erfinder: FISCHER, Walter, 88045 Friedrichshafen (DE); POHLENZ, Jürgen, 88214 Ravensburg (DE); BAILLY, Gerhard, 88046 Friedrichshafen (DE); WEBER, Tobias, 78315 Radolfzell (DE); RATZMANN, Thomas, 88074 Meckenbeuren (DE)
(86) Internationale Anmeldenummer: PCT/EP2008/060757
(87) Internationale Veröffentlichungsnummer: WO 2009/047035

(56) Entgegenhaltungen:
- WO-A-2004/038257
- WO-A-2007/014706
- US-A- 6 056 661
- US-A1- 2006 094 554

## Beschreibung

Die Erfindung betrifft eine Getriebevorrichtung mit einem Variator zum stufenlosen Variieren einer Übersetzung und mit sekundärer Leistungsverzweigung gemäß der im Oberbegriff des Patentanspruches 1 näher definierten Art.

Die US 6 056 661 A offenbart eine Getriebevorrichtung nach dem Oberbegriff des Hauptanspruchs

Aus der DE 10 2006 025 348 A1 ist ein Leistungsverzweigungsgetriebe mit einem als Hydrostateinrichtung ausgebildeten Variator bekannt. Das Leistungsverzweigungsgetriebe ist mit einem leistungsverzweigenden Planetengetriebe ausgeführt, wobei eine Welle des Planetengetriebes mit einer ersten Welle des Variators wirkverbunden ist und hierüber eine verstellbare Pumpe antreibbar ist. Eine weitere Welle des Plantetengetriebes ist über eine Zahnradstufe mit einer zweiten Welle des Variators verbunden, die wiederum mit einem Hydromotor des Variators wirkverbunden ist. Die dritte Welle des Planetengetriebes ist mit einem Getriebeeingang des Leistungsverzweigungsgetriebes verbunden, der mit einer Antriebseinrichtung in Verbindung steht.

Zusätzlich ist die zweite Welle des Variators mit mehreren Festrädern ausgeführt, welche mit mehreren auf einer Vorgelegewelle angeordneten Losrädern kämmen, wobei die Losräder zur Darstellung verschiedener Fahrbereiche bzw. Übersetzungsbereiche für Vorwärtsfahrt und wenigstens eines Fahrbereiches für Rückwärtsfahrt über Schaltelemente drehfest mit der Vorgelegewelle verbindbar sind.

Die Wechsel zwischen den Fahrbereichen sind nachteilhafterweise nicht synchron durchführbar, womit zur Vermeidung einer Unterbrechung der Zugkraft auf jeden Fall während eines Fahrbereichswechsels eine Lastschaltung mit einer Korrektur der Übersetzung im Bereich der Hydrostateinrichtung durchzuführen ist. Während solcher Schaltungen treten unter Umständen unerwünschterweise einen Arbeitsablauf einer mit dem vorbeschriebenen Leistungsverzweigungsgetriebe ausgeführten Arbeitsmaschine störende Reaktionsmomente im Antriebsstrang einer Arbeitsmaschine auf, die im Betrieb von einer Bedienperson der Arbeitsmaschine als Ruck wahrnehmbar sind.

Der vorliegenden Erfindung liegt daher die Aufgabe zu Grunde, eine Getriebevorrichtung zur Verfügung zu stellen, mittels welchem in kritischen Betriebszuständen einer Arbeitsmaschine synchrone Fahrbereichswechsel durchführbar sind und das einen konstruktiv einfachen Aufbau aufweist.

Erfindungsgemäß wird diese Aufgabe mit einer Getriebevorrichtung mit den Merkmalen des Patentanspruches 1 gelöst.

Die erfindungsgemäße Getriebevorrichtung ist mit einem Variator zum stufenlosen Variieren einer Übersetzung und mit sekundärer Leistungsverzweigung ausgebildet, wobei eine Plantetengetriebeeinrichtung zur Leistungsverzweigung vorgesehen ist. Eine erste Welle der Plantetengetriebeeinrichtung ist mit dem Getriebeeingang, eine zweite Welle der Planetengetriebeeinrichtung ist mit einer ersten Welle des Variators und eine dritte Welle der Plantetengetriebeeinrichtung ist mit einer zweiten Welle des Variators gekoppelt. Darüber hinaus sind wenigstens ein erstes Schaltelement und ein zweites Schaltelement zum Umschalten zwischen einem ersten Übersetzungsbereich und einem zweiten Übersetzungsbereich vorgesehen, innerhalb welchen die Übersetzung über den Variator jeweils stufenlos veränderbar ist.

Erfindungsgemäß überlappen sich die beiden Übersetzungsbereiche und die zweite Welle des Plantetenradsatzes ist zur Darstellung des ersten Übersetzungsbereiches über das erste Schaltelement mit dem Getriebeausgang und die dritte Welle der Planetengetriebeeinrichtung ist zur Darstellung des zweiten Übersetzungsbereiches über das zweite Schaltelement mit dem Getriebeausgang verbindbar.

Bei der Getriebevorrichtung nach der Erfindung ist über eine geeignete Betätigung des Variators zwischen der zweiten Welle und der dritten Welle der Planetengetriebeeinrichtung die Übersetzung +1 darstellbar, so dass dieser im Block umläuft und eine Umschaltung zwischen dem ersten Schaltelement und dem zweiten Schaltelement ohne Drehzahldifferenz durchführbar ist. Das bedeutet, dass die Umschaltung zwischen dem ersten Fahrbereich und dem zweiten Fahrbereich in der Getriebevorrichtung synchron und ohne Beeinträchtigung eines Arbeitsablaufes einer mit der erfindungsgemäßen Getriebevorrichtung ausgeführten Arbeitsmaschine darstellbar ist.

Darüber hinaus ist ein Anfahren einer Arbeitsmaschine aus dem Stillstand leistungsverzweigt möglich, wodurch eine Belastung des Variators auf einfache Art und Weise im Vergleich zu aus der Praxis bekannten Getriebeeinrichtungen, bei welchen ein Anfahrmoment während des Anfahrens einer Arbeitsmaschine vollständig über den Variator geführt wird, reduziert ist.

Zudem weist die Getriebevorrichtung nach der Erfindung, das mit einem einzigen, einfachen Planetengetriebe und einem Variator ausgeführt ist, einen konstruktiv einfachen Aufbau sowie eine geringe Bauteilanzahl auf, so dass die Getriebevorrichtung mit geringem Aufwand montierbar ist, kostengünstig herstellbar ist und durch einen geringen Bauraumbedarf gekennzeichnet ist.

Eine vorteilhafte und durch eine kompakte Bauart gekennzeichnete Weiterbildung der Getriebevorrichtung ist mit einer zur zweiten Welle des Variators parallel angeordneten Vorgelegewelle ausgeführt, die mit dem Getriebeausgang in Wirkverbindung steht.

Über die beiden Schaltelemente ist bei einer weiteren durch eine geringe Bauteilanzahl gekennzeichnete Ausführungsform der erfindungsgemäßen Getriebevorrichtung jeweils wenigstens ein Losrad drehfest mit der zweiten Welle des Variators und der dritten Welle der Planetengetriebeeinheit verbindbar, welches wiederum mit einem Zahnrad der Vorgelegewelle wirkverbunden ist.

Bei einer ebenfalls durch einen einfachen Aufbau gekennzeichneten und eine kompakte Bauart aufweisenden Ausführungsform der erfindungsgemäßen Getriebevorrichtung sind die beiden Schaltelemente auf der dritten Welle der Planetengetriebeeinrichtung oder der zweiten Welle des Variators angeordnet.

Um eine Belastung des Variators auf konstruktiv einfache und kostengünstige Art und Weise zu reduzieren und die über die Getriebevorrichtung nach der Erfindung übertragbare Leistung im Vergleich zu herkömmlich ausgebildeten Getriebevorrichtungen steigern zu können, ist die zweite Welle der Planetengetriebeeinrichtung bei einer Ausführungsform der Getriebevorrichtung über eine Getriebeeinrichtung mit der ersten Welle des Variators wirkverbunden, über die zwischen der ersten Welle des Variators und der zweiten Welle der Planetengetriebeeinrichtung eine hohe Übersetzung darstellbar ist.

Bei einer weiteren vorteilhaften Ausführungsform der erfindungsgemäßen Getriebevorrichtung ist eine Drehrichtungsumkehr zwischen dem Getriebeeingang und dem Getriebeausgang mittels einer Ventileinrichtung eines hydraulischen Kreislaufes des als Hydrostateinrichtung ausgebildeten Variators darstellbar, über welche eine Förderrichtung im hydraulischen Kreislauf umschaltbar ist.

Zur Darstellung weiterer Übersetzungsbereiche ist eine weitere Ausführungsform der Getriebevorrichtung nach der Erfindung zwischen der dritten Welle der Planetengetriebeeinrichtung und dem Getriebeausgang mit mehreren über weitere Schaltelemente zuschaltbaren Zahnradpaarungen ausgebildet, wobei bei einer Weiterbildung der Getriebevorrichtung wenigstens eine der Zahnradpaarungen mit einem Zwischenrad zur Darstellung einer Drehrichtungsumkehr zwischen dem Getriebeeingang und dem Getriebeausgang ausgeführt ist.

Eine weitere vorteilhafte Ausführungsform der erfindungsgemäßen Getriebevorrichtung ist mit einem dritten Schaltelement ausgebildet, über welches zur Darstellung eines dritten Übersetzungsbereiches, der sich mit dem zweiten Übersetzungsbereich überlappt, die zweite Welle der Planetengetriebeeinrichtung mit dem Getriebeausgang koppelbar ist. Damit ist sowohl der Bereichswechsel zwischen dem ersten und dem zweiten Übersetzungsbereich als auch der Bereichswechsel zwischen dem zweiten Übersetzungsbereich und dem dritten Übersetzungsbereich der erfindungsgemäßen Getriebevorrichtung synchron, d. h. ohne Differenzdrehzahlen im Bereich des ersten Schaltelementes und des zweiten Schaltelementes bzw. zwischen dem zweiten Schaltelement und dem dritten Schaltelement, mit einem kostengünstig herstellbaren und konstruktiv einfach ausgeführten Planetenradsatz mit lediglich zwei Abtriebswellen durchführbar.

Damit besteht auch auf einfache Art und Weise in Abhängigkeit des jeweils vorliegenden Anwendungsfalles die Möglichkeit, ein sogenanntes Baukastenprinzip zu verwirklichen und die erfindungsgemäße Getriebevorrichtung zur Darstellung eines synchronen Bereichswechsels lediglich mit dem ersten und dem zweiten Schaltelement auszuführen und die Getriebevorrichtung zur Darstellung von zwei synchronen Bereichswechseln zusätzlich mit dem dritten Schaltelement auszubilden, ohne den grundsätzlichen Aufbau der Getriebevorrichtung ändern zu müssen.

Das bedeutet, dass die Getriebevorrichtung nach der Erfindung in Abhängigkeit der Anforderung, ob mit der Getriebevorrichtung ein oder zwei synchrone Bereichswechsel durchzuführen sind, mit dem dritten Schaltelement ausgebildet wird oder nicht, wobei die jeweilige Ausführung bei besonders kostengünstigen Lösungen ohne aufwändige konstruktive Änderungen des grundsätzlichen Aufbaus der Getriebevorrichtung realisierbar ist.

Um einen angeforderten Wechsel zwischen den Übersetzungsbereichen der erfindungsgemäßen Getriebevorrichtung als Lastschaltung ausführen zu können, sind die Schaltelemente bei einer weiteren vorteilhaften Ausführungsform der Getriebevorrichtung als reibschlüssige Lastschaltelemente ausgebildet.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zu Gunsten der Übersichtlichkeit in der Beschreibung der Ausführungsbeispiele für bau- und funktionsgleiche Bauteile dieselben Bezugszeichen verwendet werden.

Es zeigt:
- Fig. 1: eine stark schematisierte Darstellung eines Fahrzeugantriebsstranges mit einem Räderschema eines ersten Ausführungsbeispieles der Getriebevorrichtung nach der Erfindung;
- Fig. 2: einen Fahrzeugantriebsstrang mit einem zweiten Ausführungsbeispiel der erfindungsgemäßen Getriebevorrichtung;
- Fig. 3: einen Fahrzeugantriebsstrang mit einer dritten Ausführungsform der erfindungsgemäßen Getriebevorrichtung;
- Fig. 4: einen Fahrzeugantriebsstrang mit einer vierten Ausführungsform der erfindungsgemäßen Getriebevorrichtung; und
- Fig. 5: einen Fahrzeugantriebsstrang mit einer fünften Ausführungsform der erfindungsgemäßen Getriebevorrichtung.

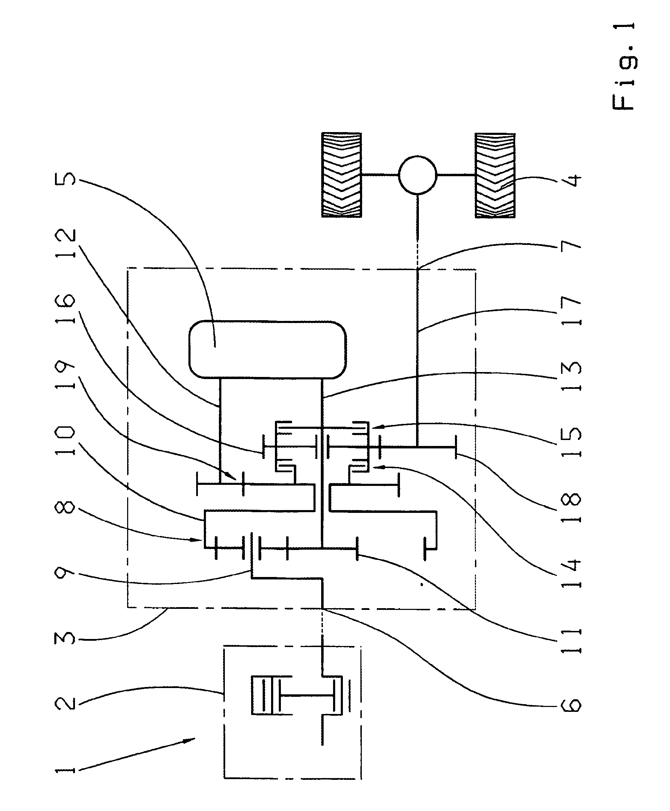

In Fig. 1 ist ein Fahrzeugantriebsstrang 1 mit einer Antriebsmaschine 2, einer Getriebevorrichtung 3 und einem Abtrieb 4 stark schematisiert dargestellt. Die Getriebevorrichtung 3 ist mit einem als Hydrostateinrichtung ausgebildeten Variator 5 zum stufenlosen Variieren einer Übersetzung der Getriebevorrichtung 3 ausgeführt. Ein von der Antriebsmaschine 2 zur Verfügung gestelltes Drehmoment wird im Bereich eines Getriebeeingangs 6 in die Getriebevorrichtung 3 eingeleitet und im Bereich eines Getriebeausgangs 7 aus der Getriebevorrichtung 3 in Richtung des Antriebs 4 geleitet.

Getriebeeingangsseitig wird das im Bereich des Getriebeeingangs 6 anliegende Drehmoment in eine Planetengetriebeeinrichtung 8 über eine vorliegend als Planetensteg ausgeführte erste Welle 9 eingeleitet. Im Bereich der Planetengetriebeeinrichtung 8 wird eine so genannte Leistungsverzweigung des Drehmomentes der Antriebsmaschine 2 durchgeführt, wobei ein Teil des Drehmomentes über eine vorliegend als Hohlrad ausgebildete zweite Welle 10 der Planetengetriebeeinrichtung 8 und eine als Sonnenrad ausgeführte dritte Welle 11 der Planetengetriebeeinrichtung 8 aufgeteilt wird. Die zweite Welle 10 der Planetengetriebeeinrichtung 8 ist mit einer ersten Welle 12 des Variators 5 und die dritte Welle 11 der Planetengetriebeeinrichtung 8 ist mit einer zweiten Welle 13 des Variators 5 gekoppelt.

Zum Umschalten zwischen einem ersten Übersetzungsbereich und einem zweiten Übersetzungsbereich ist die Getriebevorrichtung 3 mit zwei Schaltelementen 14, 15 ausgebildet. Innerhalb der beiden Übersetzungsbereiche ist die Übersetzung der Getriebevorrichtung 3 über den Variator 5 jeweils stufenlos veränderbar, wobei das Hohlrad 10 der Planetengetriebeeinrichtung 8 über das erste Schaltelement 14 mit einem drehbar auf der zweiten Welle 13 des Variators 5 angeordneten Losrad 16 verbindbar ist. Über das zweite Schaltelement 15 ist die dritte Welle bzw. das Sonnenrad der Planetengetriebeeinrichtung 8 mit dem Losrad 16 drehfest verbindbar. Das Losrad 16 kämmt mit einem drehfest mit einer Vorgelegewelle 17 verbundenen Zahnrad 18, die wiederum mit dem Getriebeausgang 7 in Wirkverbindung steht.

Zwischen dem Hohlrad 10 der Planetengetriebeeinrichtung 8 und der ersten Welle 12 des Variators 5 ist eine vorliegend als Stirnradverzahnung ausgeführte Getriebeeinrichtung 19 vorgesehen, mittels welcher das vom Hohlrad 10 der Planetengetriebeeinrichtung 8 in Richtung des Variators 5 geführte Drehmoment reduziert und die Drehzahl der ersten Welle 12 des Variators 5 gegenüber der Drehzahl des Hohlrades 10 angehoben wird.

Die beiden über die Schaltelemente 14 und 15 in der Getriebevorrichtung 3 einlegbaren Übersetzungsbereiche überlappen sich. Zur Darstellung des ersten Übersetzungsbereiches wird die zweite Welle 10 der Planetengetriebeeinrichtung 8 über das erste Schaltelement 14 mit dem Getriebeausgang 7 und zur Darstellung des zweiten Übersetzungsbereiches wird die dritte Welle 11 der Planetengetriebeeinrichtung 8 über das zweite Schaltelement 15 mit dem Getriebeausgang 7 verbunden, wobei während des Wechsels zwischen den Übersetzungsbereichen die Übersetzung im Bereich des Variators 5 auf einen Wert eingestellt wird, zu dem das Hohlrad 10 und das Sonnenrad 11 der Planetengetriebeeinrichtung 8 mit der selben Drehzahl umlaufen.

In diesem Synchronpunkt der Getriebevorrichtung 3 wird dann jeweils das zugeschaltete Schaltelement 14 oder 15 aus seinem geschlossenen Betriebszustand in seinen geöffneten Betriebszustand überführt, während das jeweils abgeschaltete Schaltelement 15 oder 14 aus seinem geöffneten in seinen geschlossenen Betriebszustand überführt wird, wobei beim Umschalten zwischen den beiden Schaltelementen 14 und 15 keine Drehzahldifferenz zu überwinden ist.

Der Variator 5 bzw. die Hydrostateinheit ist mit einer Pumpe und einem Motor in Schrägachsenbauart ausgeführt, die über ein gemeinsames Schwenkteil zwangsgekoppelt sind und weist somit eine einfache sowie kostengünstige Ansteuerung über nur einen Verstellmechanismus auf. In Abhängigkeit eines Stellwinkels des gemeinsamen Schwenkteiles zwischen dem Motor und der Pumpe des Variators 5, welches zwischen 0° bis ca. 45 ° verschwenkbar ist, wechseln die Drehzahlen der ersten Welle 12 und der zweiten Welle 13 des Variators 5 in den Endlagen des Schwenkteils jeweils zwischen Wellenstillstand und maximaler Drehzahl.

In Abhängigkeit des jeweils vorliegenden Anwendungsfalles besteht jedoch auch die Möglichkeit, dass der Variator mit voneinander unabhängig einstellbaren Einheiten ausgebildet ist.

Grundsätzlich sind die Drehrichtungen der Wellen 12 und 13 des Variators 5 derart, dass bei Vorwärtsfahrt des mit dem Fahrzeugantriebsstrang 1 ausgebildeten Fahrzeuges und einer Verschwenkung des Schwenkteils des Variators 5 im Bereich der beiden Schaltelemente 14 und 15 der für den synchronen Übersetzungswechsel erforderliche Synchronlauf einstellbar ist, wobei die Drehrichtungen der beiden Wellen 12 und 13 des Variators 5 grundsätzlich gegensinnig sind.

Die Getriebevorrichtung 3 ist mit einem einzigen, einfachen Planetengetriebe und einem Variator 5 ausgebildet, der in der vorbeschriebenen Art und Weise zwischen zwei Wellen 10 und 11 der Planetengetriebeeinrichtung 8 angeordnet ist, um einen möglichst großen, stufenlosen Fahrbereich bei synchroner Umschaltung zwischen den beiden Schaltelementen 14 und 15 darstellen zu können. Darüber hinaus ist mit der Getriebevorrichtung 3 ein Anfahren aus dem Fahrzeugstillstand leistungsverzweigt durchführbar.

Im Fahrzeugstillstand wird das Schwenkteil des Variators 5 derart verschwenkt, dass die erste Welle 12 des Variators 5 durch variatorinterne Zustände blockiert ist und die zweite Welle 13 des Variators 5 ohne Leistungsübertragung frei drehen kann, wobei die Vorgelegewelle 17 sowie der Getriebeausgang 7 bei geschlossenem ersten Schaltelement 14 blockiert sind und wie Abtrieb 4 stillstehen.

Wird das Schwenkteil des Variators 5 aus der vorgenannten Stellung verschwenkt, beginnt die erste Welle des Variators 12 zu drehen und die zweite Welle 13 des Variators 5 beginnt Leistung aufzunehmen. Im Bereich des ersten Schaltelementes 14 wird das über das Hohlrad 10 der Planetengetriebeeinrichtung 8 anliegende Drehmoment, welches nunmehr im Bereich des Variators 5 abgestützt wird, über das Losrad 16 und das Zahnrad 18 auf die Vorgelegewelle 17 und somit den Getriebeausgang 7 übertragen, womit der Abtrieb 4 bzw. das mit dem Fahrzeugantriebsstrang 1 ausgeführte Fahrzeug zu rollen beginnt. Das erste Schaltelement 14 bleibt im gesamten ersten Übersetzungsbereich bzw. Fahrbereich der Getriebevorrichtung 3 geschlossen.

Ausgehend von letztbeschriebenem Betriebszustand der Getriebevorrichtung 3 führt ein zunehmender Verstellwinkel des Schwenkteils des Variators 5 während des Anfahrvorganges des Fahrzeuges dazu, dass sich im Bereich der Planetengetriebeeinrichtung 8 zwischen dem Sonnenrad 11 und dem Hohlrad 10 in einem vordefinierten Betriebspunkt des Variators 5 eine Übersetzung mit dem Wert +1 einstellt. Das Hohlrad 10 und das Sonnenrad 11 weisen dann dieselbe Drehzahl auf und die Planetengetriebeeinrichtung 8 läuft im Block um. In diesem Betriebszustand der Getriebevorrichtung 3 ist eine Umschaltung zwischen den beiden Schaltelemente 14 und 15 ohne Drehzahldifferenz durchführbar.

Damit der Verstellbereich des Variators 5 im ersten Übersetzungsbereich und im zweiten Übersetzungsbereich möglichst mehrfach ausnutzbar ist und um die über die Getriebevorrichtung 3 übertragbare Leistung auf konstruktiv einfache Art und Weise steigern zu können, ist zwischen der ersten Welle 10 der Planetengetriebeeinrichtung 8 bzw. dem Hohlrad und der ersten Welle 12 des Variators 5 die Getriebeeinrichtung 10 vorgesehen. Mittels der Getriebeeinrichtung 10 ist eine hohe Übersetzung zwischen der ersten Welle 12 des Variators 5 und dem Hohlrad 10 der Planetengetriebeeinrichtung 8 darstellbar, womit durch die Anordnung der Getriebeeinrichtung 19 der Synchronpunkt im Bereich der beiden Schaltelemente 14 und 15 erst bei einem Verstellwinkel des Schwenkteiles deutlich größer als der halbe Gesamtschwenkwinkel erreicht wird.

Nach dem Umschalten vom ersten Schaltelement 14 in Richtung des zweiten Schaltelementes 15 wird der Schwenkwinkel des Variators 5 zur Steigerung der Abtriebswellendrehzahl bzw. der Drehzahl der Vorgelegewelle 17 reduziert. Die höchste Drehzahl der Vorgelegewelle 17 bzw. des Getriebeausgangs 7 wird erreicht, wenn bei geschlossenem zweitem Schaltelement 15 das Hohlrad 10 der Planetengetriebeeinrichtung 8 durch den Variator 5 blockiert ist. In diesem Betriebszustand der Getriebevorrichtung 3 wird das Sonnenrad 11 der Planetengetriebeeinrichtung 8 ohne Leistungsübertragung im Bereich des Variators 5 angetrieben, da das gesamte Drehmoment der Antriebsmaschine 2 über das zweite Schaltelement 15 in Richtung des Abtriebs 4 geführt wird.

Um mit der Getriebevorrichtung 3 auch einen Übersetzungsbereich für Rückwärtsfahrt ohne zusätzliche mechanische Bauteile zur Verfügung stellen zu können, ist die Getriebevorrichtung 3 in nicht näher dargestellter Art und Weise mit einer Einrichtung auszuführen, mittels welcher die hydraulische Förderrichtung im Bereich des Variators 5 bei stillstehendem Fahrzeug umschaltbar ist. Dabei ist es denkbar, dass der hydraulische Kreislauf des Variators 5 mit einer aus der DE 10 2006 025 348 A1 bekannten Ventileinrichtung ausgeführt wird.

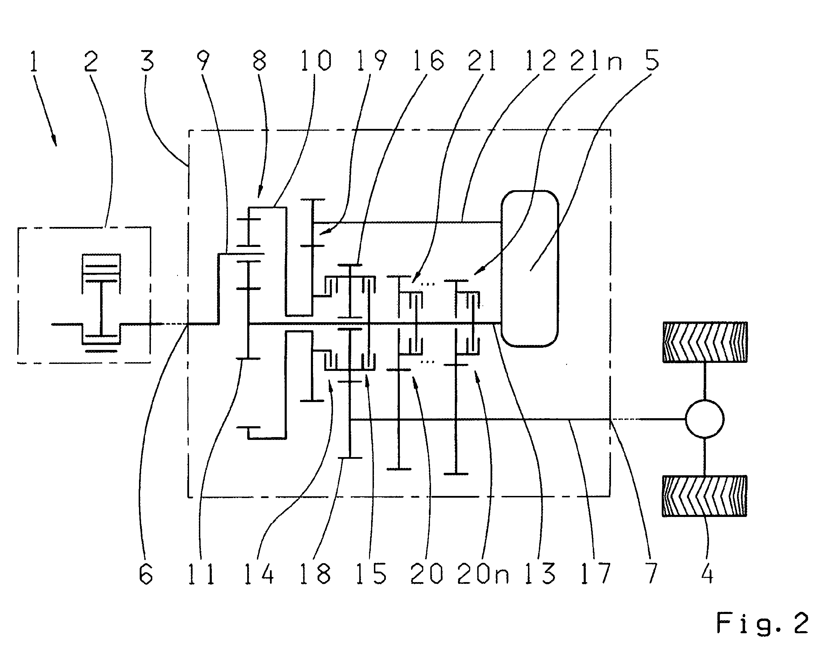

In Fig. 2 ist ein zweites Ausführungsbeispiel der Getriebevorrichtung 3 gezeigt, welches sich von dem in Fig. 1 dargestellten Ausführungsbeispiel im Bereich zwischen dem Sonnenrad 11 der Planetengetriebeeinrichtung 8 und dem Getriebeausgang 7 durch weitere Radsätze 20 bis 20n sowie diesen jeweils zugeordneten Schaltelementen 21 bis 21 n unterscheidet, um zusätzliche Übersetzungsbereiche zur Verfügung zu stellen, die durch Lastschaltvorgänge in der Getriebevorrichtung 3 einlegbar sind. Der den Bezugszeichen 20 und 21 jeweils nachgestellte Buchstabe n steht jeweils stellvertretend für die beliebige ganzzahlige Anzahl der zusätzlichen Zahnradpaarungen und Schaltelemente der Getriebevorrichtung 3, welche in Abhängigkeit des jeweils vorliegenden Anwendungsfalles variiert. Die Getriebevorrichtung 3 ist mit zusätzlichen Übersetzungsbereichen auszuführen, wenn ein mit dem Fahrzeugantriebsstrang 1 ausgeführtes Fahrzeug mit höheren Endgeschwindigkeiten betrieben werden soll.

Grundsätzlich sind Übersetzungswechsel in der Getriebevorrichtung 3 zwischen dem ersten Schaltelement 14 oder dem zweiten Schaltelement 15 und dem dritten Schaltelement 21 bzw. den weiteren Schaltelementen 21 n nur in nicht synchronem Betriebszustand der Getriebevorrichtung 3 durchführbar. Dennoch besteht bei Wechseln zwischen dem ersten Übersetzungsbereich oder dem zweiten Übersetzungsbereich und dem dritten oder dem n-ten Übersetzungsbereich jeweils die Möglichkeit, während des Umschaltvorganges die zu überbrückende Drehzahldifferenz durch Anpassung der Übersetzung des Variators 5 zu reduzieren.

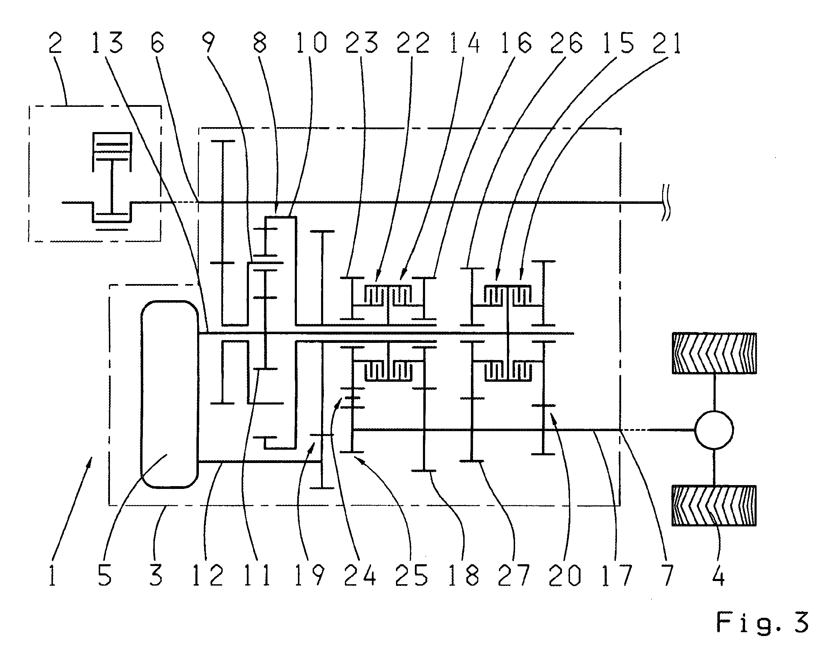

Bei dem in Fig. 3 dargestellten dritten Ausführungsbeispiel der Getriebevorrichtung 3 ist das Hohlrad 10 der Planetengetriebeeinrichtung 8 neben dem ersten Schaltelement 14 und das Losrad 16 und das Zahnrad 18 über ein weiteres Schaltelement 22 mit der Vorgelegewelle 17 in Wirkverbindung bringbar. Dabei ist ein auf dem Sonnenrad 11 der Planetengetriebeeinrichtung 8 drehbar angeordnetes Losrad 23 über das weitere Schaltelement 22 drehfest mit dem Hohlrad 10 der Planetengetriebeeinrichtung 9 verbindbar. Das Losrad 23 kämmt mit einem Zwischenrad 24, welches wiederum in Eingriff mit einem Festrad 25 der Vorgelegewelle 17 steht.

Damit ist ein Radsatz mit dem Zwischenrad 24 über das weitere Schaltelement 22 zwischen dem Hohlrad 10 der Planetengetriebeeinrichtung 8 und dem Getriebeausgang 7 in Kraftfluss der Getriebevorrichtung 3 zuschaltbar. Die Umschaltung zwischen dem ersten Schaltelement 14, dem zweiten Schaltelement 15 oder dem zusätzlichen Schaltelement 21 und dem weiteren Schaltelement 22 wird jeweils bei kleinen Drehzahlen des Abtriebs 4 oder im Stillstand des Abtriebs 4 durchgeführt. Die Schaltungen stellen jeweils Reversierschaltungen dar, mittels welchen jeweils eine Rückwärtsfahrt eines mit dem Fahrzeugantriebsstrang 1 gemäß Fig. 3 ausgeführten Fahrzeuges ermöglicht wird.

Über das zweite Schaltelement 15 ist im Gegensatz zu den Ausführungsbespielen der Getriebevorrichtung 3 gemäß Fig. 1 und Fig. 2 ein Losrad 26 drehfest mit dem Sonnenrad 11 der Planetengetriebeeinrichtung 8 verbindbar, welches mit einem weiteren Festrad 27 der Vorgelegewelle kämmt und keine integrale Einheit mit dem Losrad 16 ausbildet. Die Übersetzungsbereichswechsel, während welchen jeweils zwischen dem ersten Schaltelement 14 und dem zweiten Schaltelement 15 umgeschaltet wird, sind durch entsprechende Betätigung des Variators 5 synchron, d. h. ohne Drehzahldifferenz im Bereich der Schaltelemente 14 und 15, durchführbar.

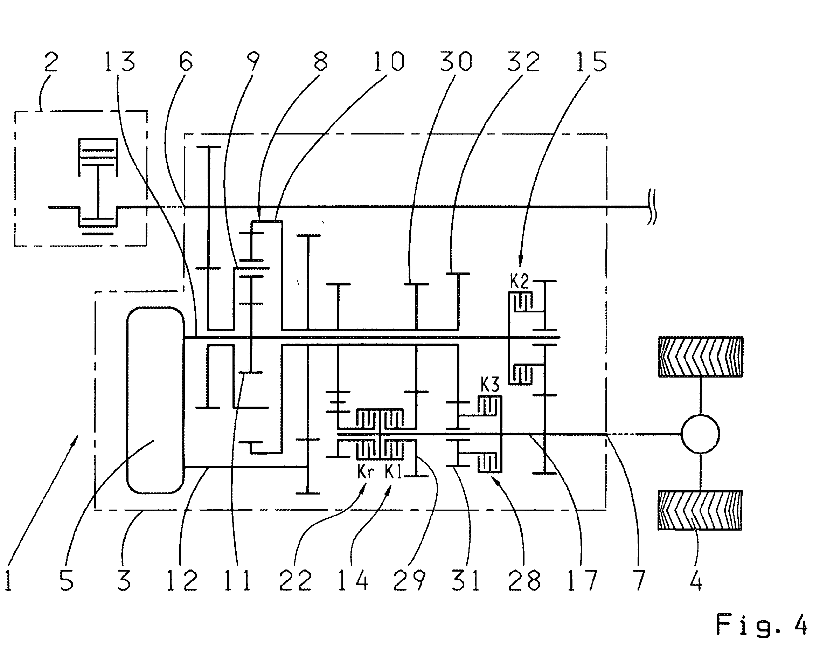

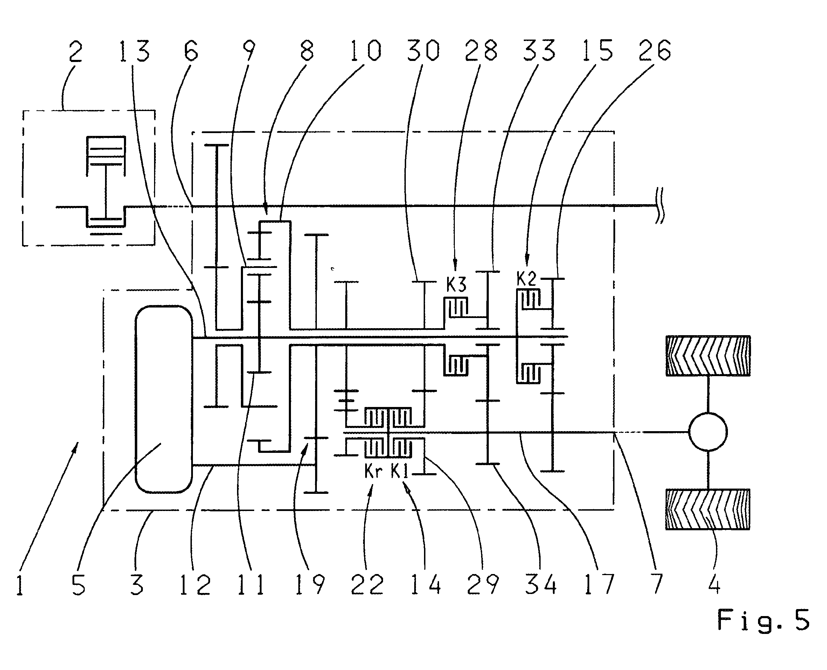

In Fig. 4 und Fig. 5 ist jeweils ein viertes und ein fünftes Ausführungsbeispiel der Getriebevorrichtung 3 dargestellt, welche grundsätzlich denselben Aufbau aufweisen und sich von den in Fig. 1 bis Fig. 3 dargestellten Ausführungsbeispielen der Getriebevorrichtung 3 dadurch unterscheiden, dass mit den Getriebevorrichtungen 3 gemäß Fig. 4 und Fig. 5 jeweils zwei synchrone Bereichswechsel durchführbar sind.

Hierfür sind die Getriebevorrichtungen 3 gemäß Fig. 4 und Fig. 5 mit den beiden Schaltelementen 14 und 15 sowie mit einem dritten Schaltelement 28 ausgeführt. Zur Darstellung des ersten Übersetzungsbereiches der Getriebevorrichtung 3 wird die zweite Welle bzw. das Hohlrad 10 der Planetengetriebeeinrichtung 8 in geschlossenem Zustand des ersten Schaltelementes 14 mit dem Getriebeausgang 7 verbunden, wobei ein auf der Vorgelegewelle 17 drehbar angeordnetes Losrad 29, das mit einem drehfest mit dem Hohlrad 10 wirkverbundenen Festrad 30 kämmt, in geschlossenem Zustand des ersten Schaltelementes 14 drehfest mit der Vorgelegewelle 17 verbunden ist.

Ausgehend von einem Betriebszustand des Fahrzeugantriebsstranges 1, zu dem in der Getriebevorrichtung 3 über das geschlossene erste Schaltelement 14 der erste Übersetzungsbereich eingelegt ist und im Stillstand des Fahrzeuges, ist der Variator 5 in seine erste Extremstellung verstellt, in der die Drehzahl der ersten Welle 12 des Variators 5, welche mit einer Motoreinrichtung des Variators 5 verbunden ist, gleich Null ist. Das über die Getriebeeinrichtung 19 mit der ersten Welle 12 des Variators 5 verbundene Hohlrad 10 steht in diesem Betriebszustand ebenfalls still. Liegt eine entsprechende Anforderung für einen Anfahrvorgang des mit dem Fahrzeugantriebsstrang 1 ausgebildeten Fahrzeuges vor, wird der Variator 5 aus der letztgenannten ersten Extremstellung über ein vorzugsweise gemeinsames Joch verschwenkt und die Drehzahl bzw. die Motordrehzahl des Motors des Variators steigt an. Dies führt gleichzeitig dazu, dass die Drehzahl des Abtriebs 4 des mit der Getriebevorrichtung 3 ausgeführten Fahrzeuges ansteigt und das Fahrzeug angefahren wird.

Zur kontinuierlichen Steigerung der Fahrzeuggeschwindigkeit wird der Variator 5 von seiner ersten Extremstellung in seine zweite Extremstellung verstellt und der erste Übersetzungsbereich der Getriebevorrichtung 3 stufenlos vollständig durchfahren. Dabei steigt die Drehzahl des Motors des Variators 5 zunehmend in Richtung seines Maximalwertes an, während die Drehzahl der Pumpe des Variators von ihrem Maximalwert auf Null abgesenkt wird. In der zweiten Extremstellung des Variators 5 stellt sich im Bereich des zweiten Schaltelementes 15 der Synchronpunkt ein, womit das zweite Schaltelement 15 ohne Drehzahldifferenz in seinen geschlossenen Betriebszustand überführbar ist, während das erste Schaltelement 14 geöffnet wird.

Nach erfolgreichem synchronen Bereichswechsel vom ersten Übersetzungsbereich in den zweiten Übersetzungsbereich und bei Vorliegen einer weiteren Anforderung zur Steigerung der Fahrzeuggeschwindigkeit wird der Variator 5 ausgehend von seiner zweiten Extremstellung wiederum in Richtung seiner ersten Extremstellung verschwenkt. Dies führt dazu, dass die Drehzahl der zweiten Welle des Variators 13 ansteigt, während die Drehzahl des Hohlrades 10 reduziert wird.

Zu einem vordefinierten Verschwenkwinkel des Jochs des Variators 5, der in Abhängigkeit der Übersetzung der von dem Losrad 29 und dem Festrad 30 ausgebildeten Stirnradverzahnung steht, wird im Bereich des zweiten Schaltelementes 15 und im Bereich des dritten Schaltelementes 28 gleichzeitig der Synchronpunkt erreicht, womit ein zweiter synchroner Bereichswechsel zwischen dem zweiten Übersetzungsbereich und dem dritten Übersetzungsbereich in der Getriebevorrichtung 3 ohne Differenzdrehzahl zwischen dem zweiten Schaltelement 15 und dem dritten Schaltelement 28 durchführbar ist.

Bei der in Fig. 4 dargestellten vierten Ausführungsform der Getriebevorrichtung 3 ist das dritte Schaltelement 28 auf der Vorgelegewelle 7 angeordnet, um ein drehbar auf der Vorgelegewelle 7 angeordnetes Losrad 31, welches mit einem drehfest mit dem Hohlrad 10 verbundenen Festrad 32 kämmt, in geschlossenem Zustand drehfest mit der Vorgelegewelle 7 zu verbinden.

Bei dem in Fig. 5 dargestellten fünften Ausführungsbeispiel der Getriebevorrichtung 3 ist das dritte Schaltelement 28 auf der zweiten Welle 13 des Variators 5 angeordnet und verbindet ein auf der zweiten Welle 13 des Variators 5 drehbar angeordnetes Losrad 33 im geschlossenen Zustand mit dem Hohlrad 10 der Planetengetriebeeinrichtung 8. Das Losrad 33 kämmt mit einem drehfest mit der Vorgelegewelle 17 verbundenen Festrad 34, womit eine Wirkverbindung zwischen dem Hohlrad 10 und dem Getriebeausgang 7 in geschlossenem Zustand des dritten Schaltelementes 28 gegeben ist.

Sowohl mit der Getriebevorrichtung 3 gemäß Fig. 4 als auch mit der Getriebevorrichtung 3 gemäß Fig. 5 sind jeweils zwei synchrone Bereichswechsel mit einem kostengünstig herstellbaren und konstruktiv einfach ausgeführten Planetenradsatz mit lediglich zwei Abtriebswellen darstellbar.

Grundsätzlich stellen die vierte und die fünfte Ausführungsform der Getriebevorrichtung 3 jeweils ein gegenüber den in Fig. 1 bis Fig. 3 dargestellten Ausführungsformen der Getriebevorrichtung 3 erweitertes System dar, wobei in Abhängigkeit des jeweils vorliegenden Anwendungsfalles ein oder zwei synchrone Bereichswechsel durchführbar sind, wenn die Getriebevorrichtung 3 den dafür erforderlichen Aufbau aufweist.

In diesem Zusammenhang ist die Getriebevorrichtung 3 zur Realisierung eines Baukastenprinzips idealerweise derart auszuführen, dass in Abhängigkeit der Anforderung für ein Zwei- oder Dreiganggetriebe mit einem oder zwei synchronen Bereichswechseln das dritte Schaltelement 28 vorgesehen wird oder die Getriebevorrichtung 3 ohne das dritte Schaltelement 28 ausgeführt wird.

Die Schaltelemente 14, 15, 21 bis 21 n, 22 und 28 der in der Zeichnung dargestellten Ausführungsbeispiele der Getriebevorrichtung 3 sind alle als reibschlüssige Lamellenkupplungen bzw. reibschlüssige Schaltelemente ausgeführt, um die in der Getriebevorrichtung 3 durchzuführenden Wechsel zwischen den Übersetzungsbereichen ohne Zugkraftunterbrechung darstellen zu können.

Die erfindungsgemäße Getriebevorrichtung ist abweichend von den in der Zeichnung dargestellten und in der vorstehenden Beschreibung näher erläuterten Ausführungsbeispielen auch mit anderen Variatoren ausführbar, über welche die Übertragung der Leistung von der Antriebsmaschine 2 in Richtung des Abtriebs 4 stufenlos übertragbar und variierbar ist. Das bedeutet, dass die Getriebevorrichtung 3 nach der Erfindung auch mit anderen geeigneten Ausführungsformen eines Variators, wie einem Umschlingungsvariator, einem Reibradvariator, zwei miteinander wirkverbundenen Elektromotoren und dergleichen, ausführbar ist, wobei im Bereich von Landmaschinen die Ausführung eines Variators als Hydrostateinrichtung bevorzugt wird, da diese Variante die höchste Leistungsdichte aufweist.

### Bezugszeichen

- 1: Fahrzeugantriebsstrang
- 2: Antriebsmaschine
- 3: Getriebevorrichtung
- 4: Abtrieb
- 5: Variator
- 6: Getriebeeingang
- 7: Getriebeausgang
- 8: Planetengetriebeeinrichtung
- 9: erste Welle der Planetengetriebeeinrichtung
- 10: zweite Welle der Planetengetriebeeinrichtung
- 11: dritte Welle der Planetengetriebeeinrichtung
- 12: erste Welle des Variators
- 13: zweite Welle des Variators
- 14: erstes Schaltelement
- 15: zweites Schaltelement
- 16: Losrad
- 17: Vorgelegewelle
- 18: Zahnrad
- 19: Getriebeeinrichtung
- 20 bis 20n: Zahnradpaarung
- 21 bis 21n: Schaltelement
- 22: weiteres Schaltelement
- 23: Losrad
- 24: Zwischenrad
- 25: Zahnrad
- 26: Losrad
- 27: Festrad
- 28: drittes Schaltelement
- 29: Losrad
- 30: Festrad
- 31: Losrad
- 32: Festrad
- 33: Losrad

## Patentansprüche

1. Getriebevorrichtung (3) mit wenigstens einem Variator (5) zum stufenlosen Variieren einer Übersetzung und mit sekundärer Leistungsverzeigung, wobei eine Planetengetriebeeinrichtung (8) zur Leistungsverzweigung vorgesehen ist, wobei eine erste Welle (9) der Planetengetriebeeinrichtung (8) mit dem Getriebeeingang (6), eine zweite Welle (10) der Planetengetriebeeinrichtung (8) mit einer ersten Welle (12) des Variator (8) und eine dritte Welle (11) der Planetengetriebeeinrichtung (8) mit einer zweiten Welle (13) des Variators (5) gekoppelt ist, und wobei wenigstens ein erstes Schaltelement (14) und ein zweites Schaltelement (15) zum Umschalten zwischen einem ersten Übersetzungsbereich und einem zweiten Übersetzungsbereich vorgesehen sind, innerhalb welchen die Übersetzung über den Variator (5) jeweils stufenlos veränderbar ist, wobei die beiden Übersetzungsbereiche sich überlappen und die zweite Welle (10) der Planetengetriebeeinrichtung (8) zur Darstellung des ersten Übersetzungsbereiches über das erste Schaltelement (14) mit dem Getriebeausgang (7) und die dritte Welle (11) der Planetengetriebeeinrichtung (8) zur Darstellung des zweiten Übersetzungsbereiches über das zweite Schaltelement (15) mit dem Getriebeausgang (7) verbindbar ist, **dadurch gekennzeichnet , dass** über die beiden Schaltelemente (14, 15) jeweils wenigstens ein Losrad (16) drehfest mit der zweiten Welle (13) des Variators (5) oder der dritten Welle (11) der Planetengetriebeeinrichtung (8) verbindbar ist.

2. Getriebevorrichtung nach Anspruch 1, **dadurch gekennzeichnet , dass** eine zur zweiten Welle (13) des Variators parallel angeordnete Vorgelegewelle (17) vorgesehen ist, die mit dem Getriebeausgang (7) in Wirkt verbindung steht.

3. Getriebevorrichtung nach Anspruch 1 oder 2, **dadurch gekennzeichnet, dass** das Losrad (16) mit einem Zahnrad (18) der Vorgelegewelle (17) wirkverbunden ist.

4. Getriebevorrichtung nach einem der Ansprüche 1 bis 3, **dadurch gekennzeichnet, dass** die beiden Schaltelemente (14, 15) auf der dritten Welle (11) der Planetengetriebeeinrichtung (8) oder der zweiten Welle (13) des Variators (5) angeordnet sind.

5. Getriebevorrichtung nach einem der Ansprüche 1 bis 4, **dadurch gekennzeichnet, dass** die zweite Welle (10) der Planetengetriebeeinrichtung (8) über eine Getriebeeinrichtung (19) mit der ersten Welle (12) des Variators (5) in Wirkverbindung steht.

6. Getriebevorrichtung nach einem der Ansprüche 1 bis 5, **dadurch gekennzeichnet, dass** die Hydrostateinrichtung (5) wenigstens eine Pumpe und wenigstens einen über einen hydraulischen Kreislauf damit wirkverbundenen Motor umfasst, die beide verstellbar und vorzugsweise als Schrägachseneinheiten ausgeführt sind.

7. Getriebevorrichtung nach einem der Ansprüche 1 bis 6, **dadurch gekennzeichnet, dass** die erste Welle (9) der Planetengetriebeeinrichtung (8) als Planetensteg, die zweite Welle (10) der Planetengetriebeeinrichtung (8) als Hohlrad und die dritte Welle (11) der Planetengetriebeeinrichtung (8) als Sonnenrad ausgeführt ist.

8. Getriebevorrichtung nach Anspruch 7, **dadurch gekennzeichnet , dass** der Variator (5) als Hydrostateinrichtung ausgebildet ist und eine Pumpe des Variators (5) über die erste Welle (12) des Variators (5) mit dem Hohlrad (10) der Planetengetriebeeinrichtung (8) verbunden ist und zur Darstellung einer Drehzahl gleich Null im Bereich des Getriebeausgangs (7) ein Leistungsfluss des Variators (5) gesperrt und die zweite Welle (13) des Variators (5) ohne Leistungsübertragung frei drehbar ist.

9. Getriebevorrichtung nach einem der Ansprüche 1 bis 8, **dadurch gekennzeichnet, dass** eine Drehrichtungsumkehr zwischen dem Getriebeeingang (6) und dem Getriebeausgang (7) mittels einer Ventileinrichtung eines hydraulischen Kreislaufes des Variators (5) darstellbar ist, über welche eine Förderrichtung im hydraulischen Kreislauf umschaltbar ist.

10. Getriebevorrichtung nach einem der Ansprüche 1 bis 9, **dadurch gekennzeichnet, dass** zwischen der dritten Welle (11) der Planetengetriebeeinrichtung (8) und dem Getriebeausgang (7) mehrere über weitere Schaltelemente (21 bis 21n) zuschaltbare Zahnradpaarungen (20 bis 20n) zur Darstellung weiterer Übersetzungsbereiche vorgesehen sind.

11. Getriebevorrichtung nach Anspruch 10, **dadurch gekennzeichnet, dass** wenigstens eine der Zahnradpaarungen mit einem Zwischenrad (24) zur Darstellung einer Drehrichtungsumkehr zwischen dem Getriebeeingang (6) und dem Getriebeausgang (7) ausgeführt ist.

12. Getriebevorrichtung nach einem der Ansprüche 1 bis 11, **dadurch gekennzeichnet, dass** ein drittes Schaltelement (28) vorgesehen ist, über welches zur Darstellung eines dritten Übersetzungsbereiches, der sich mit dem zweiten Übersetzungsbereich überlappt, die zweite Welle (10) der Planetengetriebeeinrichtung (8) mit dem Getriebeausgang (7) koppelbar ist.

13. Getriebevorrichtung nach einem der Ansprüche 1 bis 12, **dadurch gekennzeichnet, dass** die Schaltelemente (14, 15, 21 bis 21 n, 22, 28) als reibschlüssige Lastschaltelemente ausgebildet sind.

## Claims

1. Transmission device (3) having at least one variator (5) for the stepless variation of a transmission ratio and having a secondary power division, wherein a planetary gearing unit (8) is provided for the power division, wherein a first shaft (9) of the planetary gearing unit (8) is coupled to the transmission input (6), a second shaft (10) of the planetary gearing unit (8) is coupled to a first shaft (12) of the variator (5) and a third shaft (11) of the planetary gearing unit (8) is coupled to a second shaft (13) of the variator (5), and wherein at least one first shift element (14) and one second shift element (15) are provided for shifting between a first transmission ratio range and a second transmission ratio range within which the transmission ratio across the variator (5) can be steplessly varied in each case, wherein the two transmission ratio ranges overlap and the second shaft (10) of the planetary gearing unit (8) can be connected by means of the first shift element (14) to the transmission output (7) in order to realize the first transmission ratio range and the third shaft (11) of the planetary gearing unit (8) can be connected by means of the second shift element (15) to the transmission output (7) in order to realize the second transmission ratio range, **characterized in that**, by means of the two shift elements (14, 15), in each case at least one loose wheel (16) can be connected to the second shaft (13) of the variator (5) for conjoint rotation therewith or to the third shaft (11) of the planetary gearing unit (8) for conjoint rotation therewith.

2. Transmission device according to Claim 1, **characterized in that** a countershaft (17) is provided which is arranged parallel to the second shaft (13) of the variator and which is operatively connected to the transmission output (7).

3. Transmission device according to Claim 1 or 2, **characterized in that** the loose wheel (16) is operatively connected to a gearwheel (18) of the countershaft (17).

4. Transmission device according to one of Claims 1 to 3, **characterized in that** the two shift elements (14, 15) are arranged on the third shaft (11) of the planetary gearing unit (8) or on the second shaft (13) of the variator (5).

5. Transmission device according to one of Claims 1 to 4, **characterized in that** the second shaft (10) of the planetary gearing unit (8) is operatively connected via a gearing unit (19) to the first shaft (12) of the variator (5).

6. Transmission device according to one of Claims 1 to 5, **characterized in that** the hydrostatic device (5) comprises at least one pump and at least one motor operatively connected to said pump via a hydraulic circuit, which pump and motor are both adjustable and designed preferably as swashplate-type units.

7. Transmission device according to one of Claims 1 to 6, **characterized in that** the first shaft (9) of the planetary gearing unit (8) is designed as a planet web, the second shaft (10) of the planetary gearing unit (8) is designed as an internal gear, and the third shaft (11) of the planetary gearing unit (8) is designed as a sun gear.

8. Transmission device according to Claim 7, **characterized in that** the variator (5) is designed as a hydrostatic device and a pump of the variator (5) is connected via the first shaft (12) of the variator (5) to the internal gear (10) of the planetary gearing unit (8) and, to realize a rotational speed equal to zero in the region of the transmission output (7), a power flow of the variator (5) is blocked and the second shaft (13) of the variator (5) can rotate freely without transmission of power.

9. Transmission device according to one of Claims 1 to 8, **characterized in that** a rotational direction reversal between the transmission input (6) and the transmission output (7) can be realized by means of a valve unit of a hydraulic circuit of the variator (5), by means of which valve unit a delivery direction in the hydraulic circuit can be reversed.

10. Transmission device according to one of Claims 1 to 9, **characterized in that** a plurality of gearwheel pairings (20 to 20n), which can be activated by means of further shift elements (21 to 21n), for realizing further transmission ratio ranges are provided between the third shaft (11) of the planetary gearing unit (8) and the transmission output (7).

11. Transmission device according to Claim 10, **characterized in that** at least one of the gearwheel pairings is formed with an intermediate wheel (24) for realizing a rotational direction reversal between the transmission input (6) and the transmission output (7).

12. Transmission device according to one of Claims 1 to 11, **characterized in that** a third shift element (28) is provided by means of which, to realize a third transmission ratio range which overlaps the second transmission ratio range, the second shaft (10) of the planetary gearing unit (8) can be coupled to the transmission output (7).

13. Transmission device according to one of Claims 1 to 12, **characterized in that** the shift elements (14, 15, 21 to 21n, 22, 28) are designed as frictionally engaging elements that can be shifted under load.

## Revendications

1. Dispositif de transmission (3) comprenant au moins un variateur (5) pour la variation en continu d'une démultiplication et comprenant une répartition de puissance secondaire, un dispositif de transmission planétaire (8) étant prévu pour la répartition de puissance, un premier arbre (9) du dispositif de transmission planétaire (8) étant accouplé à l'entrée de la transmission (6), un deuxième arbre (10) du dispositif de transmission planétaire (8) étant accouplé à un premier arbre (12) du variateur (5) et un troisième arbre (11) du dispositif de transmission planétaire (8) étant accouplé à un deuxième arbre (13) du variateur (5), et au moins un premier élément de commutation (14) et un deuxième élément de commutation (15) étant prévus pour commuter entre une première plage de démultiplication et une deuxième plage de démultiplication, à l'intérieur desquelles la démultiplication peut être à chaque fois variée en continu par le biais du variateur (5), les deux régions de démultiplication se chevauchant et le deuxième arbre (10) du dispositif de transmission planétaire (8), pour constituer la première région de démultiplication, pouvant être connecté par le biais du premier élément de commutation (14) à la sortie de la transmission (7) et le troisième arbre (11) du dispositif de transmission planétaire (8), pour constituer la deuxième région de démultiplication, pouvant être connecté par le biais du deuxième élément de commutation (15) à la sortie de la transmission (7), **caractérisé en ce qu'**à chaque fois au moins un pignon fou (16) peut être connecté par le biais des deux éléments de commutation (14, 15) de manière solidaire en rotation au deuxième arbre (13) du variateur (5) ou au troisième arbre (11) du dispositif de transmission planétaire (8).

2. Dispositif de transmission selon la revendication 1, **caractérisé en ce qu'**il est prévu un arbre intermédiaire (17) disposé parallèlement au deuxième arbre (13) du variateur, lequel est en liaison fonctionnelle avec la sortie de la transmission (7).

3. Dispositif de transmission selon la revendication 1 ou 2, **caractérisé en ce que** le pignon fou (16) est en liaison fonctionnelle avec une roue dentée (18) de l'arbre intermédiaire (17).

4. Dispositif de transmission selon l'une quelconque des revendications 1 à 3, **caractérisé en ce que** les deux éléments de commutation (14, 15) sont disposés sur le troisième arbre (11) du dispositif de transmission planétaire (8) ou sur le deuxième arbre (13) du variateur (5).

5. Dispositif de transmission selon l'une quelconque des revendications 1 à 4, **caractérisé en ce que** le deuxième arbre (10) du dispositif de transmission planétaire (8) est en liaison fonctionnelle par le biais d'un système de transmission (19) avec le premier arbre (12) du variateur (5).

6. Dispositif de transmission selon l'une quelconque des revendications 1 à 5, **caractérisé en ce que** le système hydrostatique (5) comprend au moins une pompe et au moins un moteur connecté fonctionnellement à celle-ci par le biais d'un circuit hydraulique, ceux-ci étant réalisés de manière réglable et de préférence sous forme d'unités à axes obliques.

7. Dispositif de transmission selon l'une quelconque des revendications 1 à 6, **caractérisé en ce que** le premier arbre (9) du dispositif de transmission planétaire (8) est réalisé sous forme de porte-satellites planétaire, le deuxième arbre (10) du dispositif de transmission planétaire (8) est réalisé sous forme de couronne et le troisième arbre (11) du dispositif de transmission planétaire (8) est réalisé sous forme de roue solaire.

8. Dispositif de transmission selon la revendication 7, **caractérisé en ce que** le variateur (5) est réalisé sous forme de système hydrostatique et une pompe du variateur (5) est connectée par le biais du premier arbre (12) du variateur (5) à la couronne (10) du dispositif de transmission planétaire (8), et pour obtenir un régime égal à zéro dans la région de la sortie de la transmission (7), un flux de puissance du variateur (5) est bloqué et le deuxième arbre (13) du variateur (5) peut tourner librement sans transfert de puissance.

9. Dispositif de transmission selon l'une quelconque des revendications 1 à 8, **caractérisé en ce qu'**une inversion du sens de rotation entre l'entrée de la transmission (6) et la sortie de la transmission (7) peut être obtenue au moyen d'un système de soupape d'un circuit hydraulique du variateur (5), par le biais duquel un sens de refoulement peut être inversé dans le circuit hydraulique.

10. Dispositif de transmission selon l'une quelconque des revendications 1 à 9, **caractérisé en ce qu'**entre le troisième arbre (11) du dispositif de transmission planétaire (8) et la sortie de la transmission (7) sont prévues plusieurs paires de roues dentées (20 à 20n) pouvant être commutées par le biais d'éléments de commutation supplémentaires (21 à 21n), pour obtenir d'autres régions de démultiplication.

11. Dispositif de transmission selon la revendication 10, **caractérisé en ce qu'**au moins l'une des paires de roues dentées est réalisée avec une roue intermédiaire (24) pour réaliser une inversion de sens de rotation entre l'entrée de la transmission (6) et la sortie de la transmission (7).

12. Dispositif de transmission selon l'une quelconque des revendications 1 à 11, **caractérisé en ce qu'**il est prévu un troisième élément de commutation (28) par le biais duquel, pour réaliser une troisième région de démultiplication, qui chevauche la deuxième région de démultiplication, le deuxième arbre (10) du dispositif de transmission planétaire (8) peut être accouplé à la sortie de la transmission (7).

13. Dispositif de transmission selon l'une quelconque des revendications 1 à 12, **caractérisé en ce que** les éléments de commutation (14, 15, 21 à 21n, 22, 28) sont réalisés sous forme d'éléments de commutation de charge à engagement par friction.
